# EUROPÄISCHE PATENTSCHRIFT

(11) **EP 1 858 244 B1**
(45) Veröffentlichungstag und Bekanntmachung des Hinweises auf die Patenterteilung: **13.04.2011**
(21) Anmeldenummer: 07009115.2
(22) Anmeldetag: 07.05.2007
(51) Int. Cl.: H04N 1/60, G03F 3/10, B44C 5/04, B41M 1/10, B41F 33/00, E04F 15/02, E04F 13/08

(54) **Verfahren zur Erzeugung desselben Dekors unter Verwendung eines Musterdrucks sowie Vorrichtung dazu.**
Method for creating the same pattern using a printing pattern and device therefor
Procédé de production d'un décor identique en utilisant un modèle imprimé tout comme dispositif correspondant

(30) Priorität: 16.05.2006 DE 102006022774
(43) Veröffentlichungstag der Anmeldung: 21.11.2007
(73) Patentinhaber: Flooring Technologies Ltd., Pieta MSD 08 (MT)
(72) Erfinder:
(74) Vertreter: Rehmann, Thorsten

(56) Entgegenhaltungen:
- EP-A- 0 737 570
- EP-A- 1 454 763
- EP-A- 1 628 467
- DE-A1- 19 736 605

## Beschreibung

Die Erfindung betrifft ein Verfahren zur Erzeugung desselben Dekors, sowie eine Anlage zum Bedrucken, Beschichten und Verpressen von zwei verschiedenen Trägermaterialien mit demselben Dekor, das mit einem Kunstharz abgedeckt und anschließend mit diesem und je einem Trägermaterial verpresst wird.

Mit einem Dekor versehene Trägermaterialien, insbesondere Holzwerkstoffplatten, werden in der Regel als Oberflächenelemente zur Verkleidung von Böden, Wänden und Decken verwendet. Insbesondere bei der Verwendung von Werkstoffplatten als bodenabdeckende Elemente verwendet man als Dekor, Holzmaserungen, Fliesenmuster, Parkettimitate sowie Fantasiemuster.

Insbesondere, wenn es sich bei den gewünschten Dekoren um eine Einzelanfertigung handelt, wünscht der Auftraggeber, bzw. Kunde vor einer Fertigstellung der gesamten Charge die Inaugenscheinnahme des gewünschten Motivs auf einem Muster- bzw. Musterstück. Konventionell wird ein so genanntes Proof-Papier dazu verwendet, d. h. es wird das gewünschte Dekor mit Hilfe eines Inkjet-Druckers auf ein Papier gedruckt. Dieses Proof-Papier wird dann auf Tauglichkeit überprüft und im Falle eines positiven Ergebnisses wird ein weiterer Datensatz erzeugt, mit dem etwa eine Druckwalze erzeugt wird, die zum eigentlichen Druckvorgang des Dekors beim Bedrucken der Holzwerkstoffplatte verwendet wird.

Bei diesem Vorgehen ergibt sich jedoch das Problem, dass das Proof-Papier und das Endprodukt, die bedruckte Holzwerkstoffplatte, letztendlich auf Grund ihrer unterschiedlichen Materialien, Papier, bzw. eine holzwerkstoffbasierte Platte, ein nicht identisches Erscheinungsbild des Dekors ergeben können. Der Grund für diese Abweichung liegt darin, dass bei der Bedruckung des Proof-Papieres einerseits eine andere Tinte verwendet wird und andererseits das Aufbringverfahren in Form von Druckpunkten (Pixel) sich von dem, in der Regel mit Hilfe einer Rasterwalze durchgeführten Aufbringen einer Druckfarbe auf eine Holzwerkstoffplatte unterscheidet.

Herkömmlich wird ein von einem Auftraggeber vorgelegtes Motiv in einen Datensatz umgewandelt, welcher bereits eine gewisse Anzahl von Steuerparametern zur Steuerung eines Inkjet-Druckers enthält. Mit Hilfe des Datensatzes wird nun ein Inkjet-Drucker betrieben, um das Motiv auf ein Dekorpapier zu drucken. Ein somit erhaltenes Dekorpapier wird dem Auftraggeber vorgelegt und bei dessen Zustimmung wird unter Verwendung des vorhandenen Datensatzes ein weiterer Datensatz entworfen, welcher benutzt wird, um eine zum Drucken zu verwendende Druckwalze zu gravieren. Eine solche Gravur erfolgt vorzugsweise mit Hilfe eines Lasers. Somit unterscheidet sich bereits der zweite Datensatz bei dem nun mittels richtiger Druckfarbe das Motiv auf eine Holzwerkstoffplatte gedruckt und diese mit dem Proof-Papier verglichen wird. Sofern der Vergleich negativ ausfällt und die beiden Drucke nicht übereinstimmen, wird unter Veränderung des Datensatzes ein weiterer Druck gestartet, der unter Umständen auch die Abzweigung einer oder mehrerer Babywalzen erfordert. Ist nun schließlich eine zufriedenstellende Bedruckung auf einer Holzwerkstoffplatte erfolgt, so wird die Holzwerkstoffplatte etwa zur Erzeugung eines Fußbodenpaneels mit einer abriebfesten Schicht versehen und in einer so genannten Kurztaktpresse verpresst.

Die sich zwangsläufig beim Verpressen und der vorangehenden Beschichtung ergebenden Veränderungen erfordern hinsichtlich des optischen Erscheinungsbildes des auf die Platte gedruckten Motivs einen weiteren Vergleich des Proof-Papiers mit dem Endresultat. Sofern nicht tolerierbare Abweichungen bestehen, muss erneut unter Veränderung bei der dem Beschichtungs- und/oder Pressvorgang vorherrschenden Bedingungen versucht werden, eine Übereinstimmung von Proof-Papier und Endresultat zu erzielen. Ein solches Verfahren kann unter Umständen sehr zeitaufwändig und letztlich auch kostenintensiv ausfallen.

Aus der EP 1 145 863 B1 ist es bekannt, einen Musterdruck auf einem Tintenstrahl-Drucker herzustellen. Hinsichtlich der Helligkeit bzw. des Weißgrades und des Glanzes soll das Trägermaterial dem für den Seriendruck verwendeten Tiefdruckpapier gleichen. Hierzu ist vorgesehen, das reguläre Tiefdruckpapier mit einer möglichst transparenten Tintenaufnahmeschicht zu versehen.

Aus der EP1 628 467 A1 ist ein Verfahren bekannt, die Reproduzierbarkeit von Farben zu erhöhen, die mittels eines Inkjet-Systems auf Papieren verschiedener Farbe aufgebracht wurden. Dazu werden die Farbwerte des zu bedruckenden Papiers in die zu verwendenden Druckfarben eingerechnet.

Aus der Veröffentlichung "Farbmanagement und Rastererhalt in einem Proof" in Druckspiegel, 1/2003, Seite 20 bis 22 ist es bekannt, einen Inkjet-Drucker mit dem gleichen Datensatz anzusteuern, mit dem eine Druckplatte beschrieben wird. Ein solches Prüfsystem ist beispielsweise in dem Datenblatt "Digitaler Kontraktproof von Rasterdaten" bekannt.

In der Zeitschrift www.value-magazine.de "Gerasteter Digitalproof", April 2006 werden Vor- und Nachteile des Rasterproofs, die von den Druckprodukten und den Kundenwünschen abhängen, erörtert.

Aus der DE 197 36 605 A1 ist ein Verfahren bekannt, bei dem ein vorgegebenes Muster kostengünstig in verschiedenen Farben auf einen zu bedruckenden Gegenstand gedruckt werden kann. Dabei werden Farbauszüge eine 3- oder 4-Farbsatzes durch geänderte Farben ersetzt, ohne dass das Motiv verändert wird. Auch bei dem in dieser Druckschrift vorgestellten Verfahren sind Proof-Verfahren beispielsweise mittels eines hochauflösenden Tintenstrahldruckers vorgesehen.

Der Erfindung liegt daher die Aufgabe zu Grunde, sicherzustellen, dass zwischen einem zur Begutachtung vorgesehen Muster und einem serienmäßig gefertigten Endprojekt eine größtmögliche Übereinstimmung erzielt wird.

Erfindungsgemäß wird diese Aufgabe durch ein Verfahren zur Erzeugung desselben Dekors, bestehend aus einer Vielzahl von Bildpunkten, auf mindestens einer Seite von Trägermaterialien aus einem Ausgangsdatensatz, mit folgenden Schritten gelöst:
a) Aufdrucken des Dekors auf eine Seite eines ersten Trägermaterials als Musterdruck mit einem Inkjet-Drucker in einer ersten Druckstraße;
b) Abdecken des Dekors mit einer Kunstharzschicht;
c) Verpressen des ersten Trägermaterials mit dem Dekor und der Kunstharzschicht;
d) Aufdrucken des Dekors auf eine Seite eines zweiten Trägermaterials mittels einer Druckwalze mit einem Raster im Tiefdruckverfahren in einer zweiten Druckstraße;
e) Abdecken des Dekors mit einer Kunstharzschicht;
f) Verpressen des zweiten Trägermaterials mit dem Dekor und der Kunstharzschicht,
wobei der digitale Ausgangsdatensatz sowohl zur Steuerung des Inkjet-Druckers als auch zur Herstellung der Druckwalze verwendet wird, sodass beim Vergleich der beiden Druckbilder die Anzahl der Bildpunkte pro Flächeneinheit auf dem ersten Trägermaterial mit der Anzahl der Bildpunkte pro Flächeneinheit auf dem zweiten Trägermaterial im Wesentlichen übereinstimmt und wobei die Größe der Bildpunkte und die Düsenabstände des Inkjet-Druckers auf die Größe der Rasterpunkte und die Rastergrößen beim Tiefdruckverfahren abgestimmt werden und für den Inkjet-Druck und den Tiefdruck identische Druckflüssigkeiten verwendet werden.

Eine Anlage zum Bedrucken, Beschichten und Verpressen von zwei verschiedenen Trägermaterialien mit demselben Dekor, das mit einem Kunstharz abgedeckt und anschließend mit diesem und je einem der Trägermaterialien verpresst wird, zeichnet sich dadurch aus, dass die Vorrichtung eine erste Druckstraße und eine zweite Druckstraße mit identischen Druckflüssigkeiten aufweist, dass in der ersten Druckstraße das Dekor unter Verwendung von digitalen Ausgangsdaten mit Hilfe eines Inkjet-Druckers auf das erste Trägermaterial aufgebracht wird, und dadurch dass in der zweiten Druckstraße dasselbe Dekor unter Verwendung derselben digitalen Ausgangsdaten mit Hilfe einer Tiefdruck-Einrichtung auf das zweite Trägermaterial aufgebracht wird, wobei die Größe der Bildpunkte und die Düsenabstände des Inkjet-Druckers auf die Größe der Rasterpunkte und die Rastergrößen beim Tiefdruckverfahren so abgestimmt sind, dass die Anzahl der Bildpunkte pro Flächeneinheit auf dem ersten Trägermaterial mit der Anzahl der Bildpunkte pro Flächeneinheit auf dem zweiten Trägermaterial im Wesentlichen übereinstimmt, und dass eine Prüfeinheit mit einem optischen Abtastelement und einer Vergleichseinheit zum Vergleich der Druckergebnisse der ersten und zweiten Druckstraße hinsichtlich des optischen Erscheinungsbildes ausgangsseitig vorgesehen ist.

Erfindungsgemäß wird das einer anfänglichen Begutachtung dienende Musterstück, das erste Trägermaterial, als auch das seriengefertigte Endprodukt unter Verwendung von solchen Materialien und/oder Bedingungen erzeugt, die zur einem hinsichtlich des optischen Erscheinungsbildes identischen bzw. im Wesentlichen identischen

Ergebnis beider Druckverfahren führen. Entscheidend ist das gleiche optische Erscheinungsbild beider Drucke für den Betrachter.

Die Erfindung sieht vor, dass ein über ein Tiefdruckverfahren erzeugter Dekordruck auf einem zweiten Trägermaterial mit einem mittels eines Inkjet-Druckverfahrens (Tintenstrahldruckverfahrens) erzeugtem Musterdruck auf einem ersten Trägermaterial dadurch aufeinander abgestimmt wird, dass die in dem jeweiligen Druckverfahren vorherrschenden, den jeweiligen Druck charakterisierenden Parameter hinsichtlich des Erscheinungsbildes des jeweiligen Druckergebnisses weitgehend aneinander angepasst werden. Dazu verfügt die verwendete Druckwalze über ein Raster zur Aufnahme der Farbe, dessen Größe und Form für die Farbmenge verantwortlich ist. Idealerweise entspricht ein Rasterpunkt dabei einem Bildpunkt.

Die Anzahl der jeweils erzeugten Bildpunkte je Flächeneinheit wird bei beiden Verfahren so eingestellt, dass ein Druckergebnis mit einem im Wesentlichen gleichen Erscheinungsbild erhalten wird.

Dies geschieht über eine Anpassung der Größe der Bildpunkte und der Düsenabstände des Inkjet-Druckverfahrens (Tintenstrahldruckverfahrens) an die Größe der Rasterpunkte und die Rastergrößen beim Tiefdruckverfahren. Ein Rasterpunkt entspricht dabei idealerweise einem Bildpunkt.

Die verwendeten Druckflüssigkeiten bzw. Druckfarben werden so gewählt, dass sich mit beiden Druckverfahren ein im Wesentlichen gleiches Erscheinungsbild ergibt.

Dazu ist es zwingend erforderlich, identische Druckflüssigkeiten bzw. Druckfarben zu verwenden, da sich ansonsten Farbabweichungen, so genannte Metameri, einstellen können. Unter Metameri wird verstanden, wenn Farben, welche in einem bestimmten Licht gleich erscheinen, sich als unterschiedlich zeigen, wenn die Lichtquelle sich ändert. Dies tritt insbesondere auf, wenn verschiedene Pigmentkombinationen benutzt werden. Durch eine Anpassung der jeweiligen Bindemittel, Lösungsmittel und Pigmente wird vorteilhafterweise mit beiden Druckverfahren ein hinsichtlich des optischen Erscheinungsbildes im Wesentlichen im wesentliches identisches Druckergebnis erzielt, mit dem durch den Musterdruck zutreffende Aussagen über den zu erwartenden Seriendruck des jeweiligen Dekors gemacht werden können.

Vorteilhafterweise wird für den Musterdruck und den Dekordruck das gleiche Trägermaterial eingesetzt, damit der Vergleich der beiden Druckbilder untereinander aufgrund der gleichen verwendeten Trägermaterialien effektiver wird. Vorteilhafterweise können als Trägermaterialien Holzwerkstoff-, Kunststoff-, Stein- oder Linoleumplatten verwendet werden. Es ist aber auch möglich, als Trägermaterial herkömmliche Dekorpapiere einzusetzen.

Es hat sich gezeigt, dass es sinnvoll ist, den Schritt des Vergleichens des Ergebnisses des Musterdruckes mit dem eigentlichen Dekordruck nach dem Beschichten und Verpressen des Musterdruckes mit dem Träger durchzuführen, um eine möglichst seriennahe Vergleichsmöglichkeit von Musterdruck und Dekordruck zu erhalten.

Um eine möglichst genaue Imitation des natürlichen Werkstoffes zu erhalten, ist es von Vorteil, wenn beim Verpressen des Dekordrucks und des beschichteten Musterdruckes mit dem Trägermaterial mit Hilfe eines Oberflächenprägewerkzeuges ein zum Dekor synchrones Oberflächenrelief eingeprägt wird.

Vorteilhafterweise wird das mit dem Dekordruck versehene Trägermaterial und das mit dem Musterdruck versehene Trägermaterial mit einer Anfasung an wenigstens zwei gegenüberliegenden Kanten versehen.

Das Drucken des Dekors erfolgt vorteilhafterweise in einem indirektem Tiefdruckverfahren, bei dem die Druckflüssigkeiten über eine Gummiwalze indirekt auf das Trägermaterial aufgetragen werden, um so Unebenheiten des Trägermaterials auszugleichen und trotzdem ein gleichmäßiges Druckbild zu erhalten.

Es hat sich gezeigt, dass die Druckwalze für das Tiefdruckverfahren mit Hilfe eines Lasers, eines Ätzverfahrens oder mit Hilfe des Erodierverfahrens erzeugt werden kann. Durch diese Verfahren kann eine besonders präzise Gravur der Druckwalze erreicht werden.

Die Vorrichtung weist eine erste Druckstraße und eine zweite Druckstraße auf, wobei in der ersten Druckstraße das Dekor mit Hilfe eines Inkjet-Druckers auf ein erstes Trägermaterial aufgebracht wird und wobei in der zweiten Druckstraße dasselbe Dekor mit Hilfe einer Tiefdruck-Einrichtung auf ein zweites Trägermaterial aufgebracht wird, wobei eine Prüfeinheit mit einem optischen Abtastelement und einer Vergleichseinheit zum Vergleich der Druckergebnisse der ersten und zweiten Druckstraße hinsichtlich des optischen Erscheinungsbildes ausgangsseitig vorgesehen ist, um einen effektiven Vergleich der beiden Druckergebnisse zu ermöglichen.

Die Prüfeinheit dient der optischen Erfassung eines Druckbildes und verwendet dazu das optische Abtastelement, das beispielsweise aus einem CCD-Element (Chargecoupled Device) bestehen kann. Ein CCD-Element ist ein elektronisches Bauteil, das in optischen Geräten eingesetzt wird. Damit kann die Bildstärke fein gerastert, ortsauflösend gemessen werden. Dabei wird angestrebt, eine möglichst genaue Abbildung für eine anschließende Speicherung und Wiedergabe zu erhalten. Die Vergleichseinheit ist beispielsweise ein Computer, der über einen vorgegebenen Algorithmus einen Vergleich der beiden Druckbilder zur Ermittlung des Übereinstimmungsgrades vornimmt.

Es hat sich gezeigt, dass es vorteilhaft ist, dass das optische Abtastelement eine Steuerungseinheit enthält, in welcher die aus dem Abtastvorgang gewonnen Ergebnisse mit einem vorgegebenen Datensatz verglichen werden können und bei Übereinstimmung damit bzw. tolerierbaren Abweichungen davon, ein Schaltimpuls zur Steuerung der zweiten Druckstraße abgebbar ist, damit ein kostengünstiger Abgleich der beiden Druckbilder möglich ist.

Vorteilhafterweise kann das Dekor in der zweiten Druckstraße mit einem indirektem Druckverfahren über eine Gummiwalze indirekt auf die zweite Trägerplatte aufgebracht werden, um Unebenheiten der Trägerplatte auszugleichen.

Anhand der beigefügten Figuren wird nachfolgend ein Ausführungsbeispiel der Erfindung näher erläutert. Es zeigen:

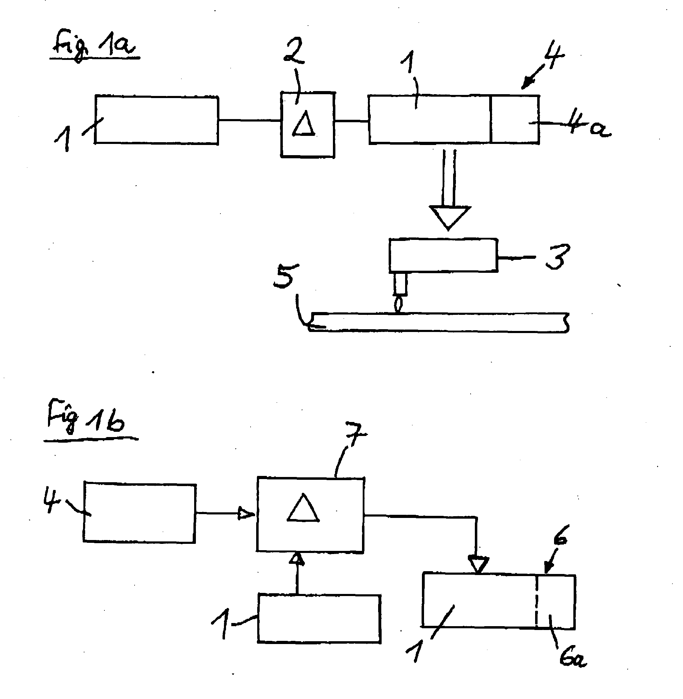

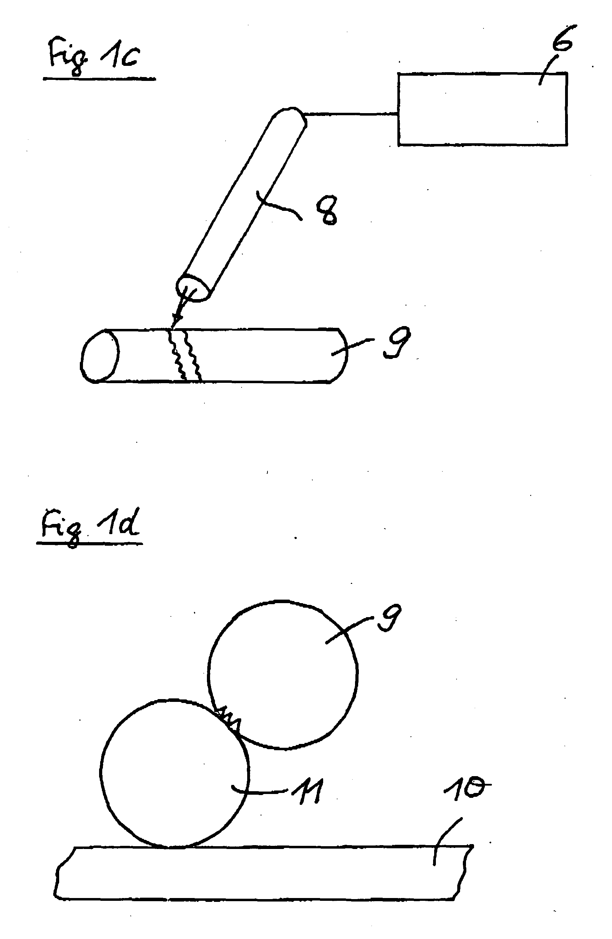

Figur 1 a - d ein stark vereinfachtes Ablaufdiagramm gemäß der Erfindung.

Ein Dekor, etwa in Form einer Holzmaserung, wird in Form von Ausgangsdaten 1 bereitgestellt, die durch Abfotografieren eines Originals mittels einer Digitalkamera gewonnen werden. Aus den Ausgangsdaten 1 wird mit Hilfe einer elektronischen Einrichtung 2 ein zur Verwendung in einem Inkjet-Drucker 3 einsetzbarer Datensatz 4 erzeugt. Dieser Datensatz 4 enthält neben den Ausgangsdaten 1 der Ansteuerung von Inkjet-Düsen dienende zusätzliche Steuerungsdaten bzw. Steuerungsparameter 4a. Mit Hilfe des Inkjet-Druckers wird nun eine Holzwerkstoffplatte 5 bedruckt, siehe Figur 1 a. Dabei wird als Druckmedium eine serientaugliche Druckfarbe verwendet. Im Rahmen der Erfindung versteht man darunter eine Farbe, die dem hohen Druck und den Temperaturbelastungen bei dem Pressvorgang der Holzwerkstoffplatte in einer Kurztaktpresse Stand hält. Die Holzwerkstoffplatte 5 wird nach dem Bedrucken mit einer ersten kunstharzbasierten Schicht, die vorzugsweise Melamin- oder Harzstoffharz enthält, beschichtet. In dieser ersten Schicht sind erfindungsgemäß Korund-Partikel zur Einstellung der gewünschten Abriebfestigkeit eingebettet. Auf die erste Schicht wird eine weitere ebenfalls kunstharzbasierte Deckschicht aufgebracht. In einer Kurztaktpresse werden in an sich bekannter Weise die Kunstharzschichten mit der bedruckten Holzwerkstoffplatte 5 verpresst. Das so entstandene Produkt, welches in geringen Abmessungen von vorzugsweise Plattenlängen zwischen 1 bis 2 m und ebensolchen Plattenbreiten besteht, kann nun hinsichtlich seines optischen Erscheinungsbildes betrachtet werden.

Sofern das mit Hilfe des Inkjet-Druckers 3 aufgebrachte Dekor den Vorstellungen des Auftraggebers bzw. Kunden entspricht, kann aus den Ausgangsdaten 1 entsprechend dem Datensatz 4 ein weiterer Datensatz 6 als Basis für ein indirektes Tiefdruckverfahren erzeugt werden, Figur 1b. Dies ergibt insbesondere Vorteile, wenn mit dem gewünschten Dekor versehene Holzwerkstoffplatten in großen Stückzahlen produziert werden sollen.

Mit einer in der Figur 1b vereinfacht mit dem Bezugszeichen 7 dargestellten elektronischen, vorzugsweise computerbetriebenen Schreib- und Lesevorrichtung werden den Ausgangsdaten 1 Steuerungsparameter 6a zur Steuerung eines Lasers 8 (Figur 1c) zugefügt. Mit Hilfe der Steuerungsparameter 6a wird eine in Figur 1c schematisch dargestellte Druckwalze 9 entsprechend den Ausgangsdaten 1 graviert. Der weitere Datensatz 6 wie auch der Datensatz 4 wird erfindungsgemäß aus den Ausgangsdaten 1 durch jeweiligen Zusatz der entsprechenden Steuerungsparameter analog erzeugt.

Nach Fertigstellung der Druckwalze 9 mittels Lasergravur wird im konventionellen Tiefdruckverfahren unter Verwendung einer beim Inkjet-Druckverfahren verwendeten Drucktinte und einer hinsichtlich des optischen Erscheinungsbildes entsprechenden Druckfarbe in einer Serienproduktionsanlage das Bedrucken von großformatigen Holzwerkstoffplatten 10 durchgeführt, Figur 1d. Dabei wird das den Ausgangsdaten 1 entsprechende Dekor über eine Auftragswalze 11 aufgebracht. Es ist erfindungsgemäß somit sichergestellt, dass eine Übereinstimmung zwischen der zur Musterung einer geringen Stückzahl (Musterstückzahl) von etwa eins bis zehn und mit geringen Abmessungen hergestellten Holzwerkstoffplatte 5 und der im Serienproduktionsprozess mit dem gleichen Dekor versehenen Holzwerkstoffplatten 10 hinsichtlich des optischen Erscheinungsbildes besteht.

### Bezugszeichenliste

- 1: Ausgangsdaten
- 2: elektronische Einrichtung
- 3: Tintenstrahldrucker
- 4: Datensatz
- 4a: Steuerungsparameter
- 5: Holzwerkstoffplatte
- 6: Datensatz
- 6a: Steuerungsparameter
- 7: Schreib- und Lesevorrichtung
- 8: Laser
- 9: Druckwalze
- 10: Holzwerkstoffplatte

## Patentansprüche

1. Verfahren zur Erzeugung desselben, aus einer Vielzahl von Bildpunkten bestehenden Dekors, auf jeweils einer Seite zweier verschiedener Trägermaterialien (5, 10) aus einem digitalen Ausgangsdatensatz (1) mit folgenden Schritten:
a) Aufdrucken des Dekors auf eine Seite eines ersten Trägermaterials (5) als Musterdruck mit einem Inkjet-Drucker (3) in einer ersten Druckstraße;
b) Abdecken des Dekors mit einer Kunstharzschicht;
c) Verpressen des ersten Trägermaterials (5) mit dem Dekor und der Kunstharzschicht;
d) Aufdrucken des Dekors auf eine Seite eines zweiten Trägermaterials (10) mittels einer Druckwalze (9) mit einem Raster im Tiefdruckverfahren in einer zweiten Druckstraße;
e) Abdecken des Dekors mit einer Kunstharzschicht;
f) Verpressen des zweiten Trägermaterials (10) mit dem Dekor und der Kunstharzschicht,
wobei der digitale Ausgangsdatensatz (1) sowohl zur Steuerung des Inkjet-Druckers (3) als auch zur Herstellung der Druckwalze (9) verwendet wird, sodass die Anzahl der Bildpunkte pro Flächeneinheit auf dem ersten Trägermaterial (5) mit der Anzahl der Bildpunkte pro Flächeneinheit auf dem zweiten Trägermaterial (10) im Wesentlichen übereinstimmt und wobei die Größe der Bildpunkte und die Düsenabstände des Inkjet-Druckers (3) auf die Größe der Rasterpunkte und die Rastergrößen beim Tiefdruckverfahren abgestimmt werden und für den Inkjetdruck und den Tiefdruck identische Druckflüssigkeiten verwendet werden.

2. Verfahren nach Anspruch 1, **dadurch gekennzeichnet, dass** für die Druckflüssigkeiten identische Lösemittel, Pigmente und Bindemittel verwendet werden.

3. Verfahren nach einem oder mehreren der voranstehenden Ansprüche, **dadurch gekennzeichnet, dass** als Trägermaterial eine Holzwerkstoffplatte, eine Kunststoffplatte, eine Steinplatte, eine Linoleumplatte oder ein Dekorpapier verwendet wird.

4. Verfahren nach Anspruch 3, **dadurch gekennzeichnet, dass** beim Verpressen der Trägermaterialien (5, 10) mit dem Dekor und der Kunstharzschicht eine zum Dekor synchrone Oberflächenstruktur eingeprägt wird.

5. Verfahren nach Anspruch 3 oder 4, **dadurch gekennzeichnet, dass** das erste Trägermaterial (5) und das zweite Trägermaterial (10) mit einer Anfasung an zumindest zwei gegenüberliegenden Kanten versehen werden.

6. Verfahren nach einem oder mehreren der vorangehenden Ansprüche, **dadurch gekennzeichnet, dass** das Raster der Druckwalze (9) für das Tiefdruckverfahren mit Hilfe eines Lasers, eines Ätzverfahrens oder eines Erodierverfahrens erzeugt wird.

7. Verfahren nach Anspruch 6, **dadurch gekennzeichnet, dass** das Drucken des Dekors auf das zweite Trägermaterial (10) in einem indirekten Tiefdruckverfahren durchgeführt wird.

8. Vorrichtung zum Bedrucken, Beschichten und Verpressen von zwei verschiedenen Trägermaterialien (5, 10) mit demselben Dekor, das mit einem Kunstharz abgedeckt und anschließend mit diesen und je einem der Trägermaterialien (5, 10) verpresst wird **dadurch gekennzeichnet, dass** die Vorrichtung eine erste Druckstraße und eine zweite Druckstraße mit identischen Druckflüssigkeiten aufweist, dass in der ersten Druckstraße das Dekor unter Verwendung von digitalen Ausgangsdaten (1) mit Hilfe eines Inkjet-Druckers (3) als Musterdruck auf das erste Trägermaterial (5) aufgebracht wird und dass in der zweiten Druckstraße dasselbe Dekor unter Verwendung derselben digitalen Ausgangsdaten (1) mit Hilfe einer Tiefdruck-Einrichtung auf das zweite Trägermaterial (10) aufgebracht wird, wobei die Größe der Bildpunkte und die Düsenabstände des Inkjet-Druckers (3) auf die Größe der Rasterpunkte und die Rastergröße beim
Tiefdruckverfahren so abgestimmt sind, dass die Anzahl der Bildpunkte pro Flächeneinheit auf dem ersten Trägermaterial (5) mit der Anzahl der Bildpunkte pro Flächeneinheit auf dem zweiten Trägermaterial (10) im Wesentlichen übereinstimmt, und dass eine Prüfeinheit mit einem optischen Abtastelement und einer Vergleichseinheit zum Vergleich der Druckergebnisse der ersten und zweiten Druckstraße hinsichtlich des optischen Erscheinungsbildes ausgangsseitig vorgesehen ist.

9. Vorrichtung nach Anspruch 8, **dadurch gekennzeichnet, dass** das optische Abtastelement eine Steuerungseinheit aufweist, in welcher die aus dem Abtastvorgang gewonnenen Ergebnisse mit dem vorgegebenen Datensatz verglichen werden und bei einer Übereinstimmung damit oder einer tolerierbaren Abweichung davon, ein Schaltimpuls zur Steuerung der zweiten Druckstraße abgebbar ist.

10. Vorrichtung nach Anspruch 8 oder 9, **dadurch gekennzeichnet, dass** das Dekor in der zweiten Druckstraße mit Hilfe einer indirekten Tiefdruck-Einrichtung aufbringbar ist.

## Claims

1. Method for producing the same decoration consisting of a large number of pixels on one respective side of two different carrier materials (5, 10) from a digital data output record (1) comprising the following steps:
a) printing the decoration on one side of a first carrier material (5) as a sample print with an inkjet printer (3) in a first printing line;
b) covering the decoration with a synthetic resin layer;
c) pressing the first carrier material (5) with the decoration and the synthetic resin layer;
d) printing the decoration on one side of a second carrier material (10) by means of a pressure roller (9) with a screen by the gravure printing method in a second printing line;
e) covering the decoration with a synthetic resin layer;
f) pressing the second carrier material (10) with the decoration and the synthetic resin layer,
wherein the digital data output record (1) is used both to control the inkjet printer (3) and to produce the pressure roller (9), so the number of pixels per unit area on the first carrier material (5) substantially coincides with the number of pixels per unit area on the second carrier material and wherein the size of the pixels and the nozzle spacings of the inkjet printer (3) are matched to the size of the screen dots and the screen sizes in the gravure printing method and identical printing liquids are used for the inkjet printing and the gravure printing.

2. Method according to claim 1, **characterised in that** identical solvents, pigments and binders are used for the printing liquids.

3. Method according to any one or more of the preceding claims, **characterised in that** a wood-based material panel, a plastics material panel, a stone slab, a linoleum panel or a decorative paper is used as the carrier material.

4. Method according to claim 3, **characterised in that** when pressing the carrier materials (5, 10) with the decoration and the synthetic resin layer, a surface structure which is synchronous with the decoration is embossed.

5. Method according to claim 3 or 4, **characterised in that** the first carrier material (5) and the second carrier material (10) are provided with a chamfer on at least two opposing edges.

6. Method according to any one or more of the preceding claims, **characterised in that** the screen of the pressure roller (9) for the gravure printing method is produced with the aid of a laser, an etching method or an erosion method.

7. Method according to claim 6, **characterised in that** the printing of the decoration on the second carrier material (10) is carried out by an indirect gravure printing method.

8. Apparatus for printing, coating and pressing two different carrier materials, (5, 10) with the same decoration, which is covered with a synthetic resin and then pressed therewith and with one of the carrier materials (5, 10) in each case, **characterised in that** the apparatus has a first printing line and a second printing line with identical printing liquids, **in that**, in the first printing line, the decoration is applied using digital output data (1) with the aid of an inkjet printer (3) as a sample print on the first carrier material (5) and **in that**, in the second printing line, the same decoration is applied using the same digital output data (1) with the aid of a gravure printing device onto the second carrier material (10), the size of the pixels and the nozzle spacings of the inkjet printer (3) being matched to the size of the screen dots and the screen size in the gravure printing method in such a way that the number of pixels per unit area on the first carrier material (5) substantially coincides with the number of pixels per unit area on the second carrier material (10), and **in that** a checking unit with an optical scanning element and a comparison unit is provided to compare the printing results of the first and the second printing line with regard to the optical appearance on the output side.

9. Apparatus according to claim 8, **characterised in that** the optical scanning element has a control unit, in which the results obtained from the scanning process are compared with the predetermined data record and, where there is agreement therewith or a tolerable deviation therefrom, a switching pulse can be output to control the second printing line.

10. Apparatus according to claim 8 or 9, **characterised in that** the decoration in the second printing line can be applied with the aid of an indirect gravure printing device.

## Revendications

1. Procédé de production d'un décor identique consistant en plusieurs pixels d'image, sur un côté de chacun de deux matériaux de support (5, 10) différents, à partir d'un jeu de données de départ (1) numérique, comprenant les étapes suivantes :
a) impression en tant qu'impression modèle du décor sur un côté d'un premier matériau de support (5), à l'aide d'une imprimante à jet d'encre (3), dans une première voie d'impression ;
b) recouvrement du décor par une couche de résine synthétique ;
c) pressage du premier matériau de support (5) avec le décor et la couche de résine synthétique ;
d) impression du décor sur un côté d'un deuxième matériau de support (10) à l'aide d'un rouleau d'imprimerie (9) présentant une trame, par le procédé d'impression en creux, dans une deuxième voie d'impression ;
e) recouvrement du décor par une couche de résine synthétique ;
f) pressage du deuxième matériau de support (10) avec le décor et la couche de résine synthétique,
le jeu de données de départ (1) étant utilisé aussi bien pour piloter d'imprimante à jet d'encre (3) que pour fabriquer le rouleau d'impression (9), de façon que le nombre de pixels d'image par unité de surface sur le premier matériau de support (5) coïncide sensiblement avec le nombre de pixels d'image par unité de surface sur le deuxième matériau de support (10), et la taille des pixels d'image et les intervalles entre injecteurs de l'imprimante à jet d'encre (3) étant accordés sur la taille des points de trame et la taille de la trame lors du procédé d'impression en creux, et des liquides d'impression identiques étant utilisés pour l'impression par jet d'encre et l'impression en creux.

2. Procédé selon la revendication 1, **caractérisé en ce que** l'on utilise pour les liquides d'impression des solvants, des pigments et des liants identiques.

3. Procédé selon l'une ou plusieurs des revendications précédentes, **caractérisé en ce qu'**on utilise en tant que matériau de support un panneau en matériau dérivé du bois, un panneau en matériau synthétique, un panneau de pierre, un panneau de linoléum, ou un papier de décor.

4. Procédé selon la revendication 3, **caractérisé en ce que** lors du pressage des matériaux de support (5, 10) avec le décor et la couche de résine synthétique, on estampe une structure de surface synchrone avec le décor.

5. Procédé selon la revendication 3 ou 4, **caractérisé en ce que** le premier matériau de support (5) et le deuxième matériau de support (10) sont munis d'un chanfrein sur au moins deux arêtes opposées.

6. Procédé selon l'une ou plusieurs des revendications précédentes, **caractérisé en ce que** la trame du rouleau d'impression (9) pour le procédé d'impression en creux est produite avec l'aide d'un laser, d'un procédé de corrosion ou d'un procédé d'érosion.

7. Procédé selon la revendication 6, **caractérisé en ce que** l'impression du décor sur le deuxième matériau de support (10) est mis en oeuvre dans un procédé d'impression en creux indirect.

8. Dispositif pour imprimer, recouvrir d'une couche, et presser deux matériaux de support (5, 10) différents avec le même décor que
l'on recouvre d'une résine synthétique et que l'on presse ensuite avec celle-ci et l'un respectif des matériaux de support (5, 10), **caractérisé en ce que** le dispositif présente une première voie d'impression et une deuxième voie d'impression ayant des liquides d'impression identiques, **en ce que** dans la première voie d'impression, le décor est apporté en tant qu'impression modèle sur le premier matériau de support (5) avec l'aide d'une imprimante à jet d'encre (3) en utilisant des données de départ (1) numériques, et **en ce que** dans la deuxième voie d'impression, le même décor est apporté sur le deuxième matériau de support (10) avec l'aide d'un dispositif d'impression en creux en utilisant les mêmes données de départ (1) numériques, la taille des pixels d'image et les intervalles entre injecteurs de l'imprimante à jet d'encre (3) étant accordés sur la taille des points de trame et la taille de la trame lors du procédé d'impression en creux de façon que le nombre de pixels d'image par unité de surface sur le premier matériau de support (5) coïncide sensiblement avec le nombre de pixels d'image par unité de surface sur le deuxième matériau de support (10), et **en ce qu'**il est prévu en sortie une unité de contrôle comprenant d'une part un élément de balayage optique et d'autre part une unité de comparaison pour comparer les résultats d'impression de la première et de la deuxième voie d'impression en matière de rendu optique.

9. Dispositif selon la revendication 8, **caractérisé en ce que** l'élément de balayage optique présente une unité de pilotage dans laquelle les résultats obtenus à partir du processus de balayage sont comparés avec le jeu de données prédéfini et en cas de concordance avec celui-ci ou d'écart tolérable par rapport à celui-ci, une impulsion de commutation pour piloter la deuxième voie d'impression peut être envoyée.

10. Dispositif selon la revendication 8 ou 9, **caractérisé en ce que** le décor peut être apporté dans la deuxième voie d'impression avec l'aide d'un dispositif d'impression en creux indirect.
